# EUROPEAN PATENT APPLICATION

(11) **EP 2 223 960 A1**
(43) Date of publication of application: **01.09.2010**
(21) Application number: 08861933.3
(22) Date of filing: 17.11.2008
(51) Int. Cl.: C08L 23/00, C08K 5/134, C08K 5/3435

(54) **OLEFIN ELASTIC RESIN COMPOSITION**

(30) Priority: 18.12.2007 JP 2007325434
(71) Applicant: Adeka Corporation, Tokyo 116-0012 (JP)
(72) Inventor: YOKOTA, Akiko, Saitama-shi Saitama 336-0022 (JP); FUKUSHIMA, Mitsuru, Saitama-shi Saitama 336-0022 (JP)
(74) Representative: Jones, Helen M.M.
(86) International application number: PCT/JP2008/070858
(87) International publication number: WO 2009/078239

(57) **Abstract**

Disclosed is an olefin elastic resin composition wherein a rubber component is blended in a large amount. This olefin elastic resin composition has an excellent weatherability without suffering from bleeding or blooming. Specifically disclosed is an olefin elastic resin composition which is obtained by blending 10 to 30 parts by mass of an olefin type rubber component, 0.001 to 10 parts by mass of a hindered amine compound represented by the general formula (1) below, 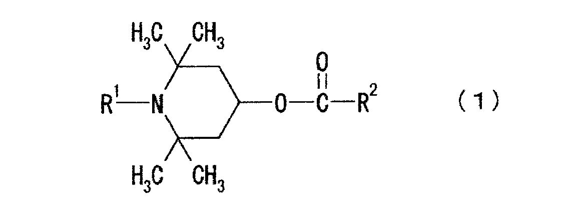 (wherein R¹ represents a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical; and R² represents an alkyl group having 1 to 30 carbon atoms or an alkenyl group having 2 to 30 carbon atoms.) and 0.001 to 10 parts by mass of a benzoate compound represented by the general formula (2) below, 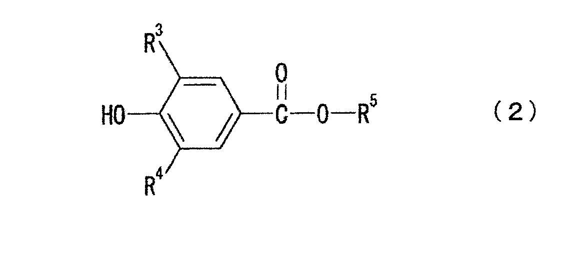 (wherein R³ and R⁴ independently represent a hydrogen atom, an alkyl group having 1 to 12 carbon atoms or the like; and R⁵ represents an alkyl group having 1 to 30 carbon atoms.) with respect to 100 parts by mass of a polyolefin resin.

## Description

### Technical Field

The present invention relates to an olefin elastic resin composition. More particularly, the present invention relates to an olefin elastic resin composition containing a large amount of rubber component and having an excellent weatherability without bleeding or blooming.

### Background Art

Olefin resins such as polypropylene and polyethylene have been widely used in automotive components, packaging materials, agricultural materials, sundries, medical devices and the like, because of their excellent chemical and physical properties.

There has been known a method for improving an impact resistance by imparting elasticity with blending various rubber components, for the purpose of extension of the range of use of the polyolefin resins. The method has been employed for automotive interior/exterior materials and the like.

On the other hand, a resin composition used in an automotive exterior etc. is exposed to intense ultraviolet rays in the open air and to high temperatures in summer, so that the resin composition changes color due to deterioration and becomes unfit for use due to loss of strength and transparency. Thus, it is usually necessary to stabilize the resin composition with a hindered amine compound, a UV absorber or the like.

As such a hindered amine compound, bis(2,2,6,6-tetramethyl piperidyl) sebacate etc. are suggested in Patent Document 1, and bis(1-octoxy-2,2,6,6-tetramethyl piperidyl) sebacate etc. are also suggested in Patent Document 2. In addition, the resin compositions with the combined use of hindered amine compound and benzoate compound are suggested in Patent Documents 3 to 6 as a resin composition which needs a high level stabilization.
Patent Document 1: Japanese Examined Patent Application Publication No.46-42618 (Claims and the like)
Patent Document 2: Japanese Unexamined Patent Application Publication No.1-113368 (Claims and the like)
Patent Document 3: Japanese Unexamined Patent Application Publication No.4-80244 (Claims, Examples 1 and 2 and the like)
Patent Document 4: Japanese Unexamined Patent Application Publication No.2005-48077 (Claims and the like)
Patent Document 5: Japanese Unexamined Patent Application Publication No.2005-54105 (Claims and the like)
Patent Document 6: Japanese Unexamined Patent Application Publication No.2006-342257 (Claims and the like)

### Disclosure of the Invention

### Problems to be Solved by the Invention

A polyolefin containing a large amount of rubber component is, however, poor in compatibility with a hindered amine compound. Thus, even when using the hindered amine compounds described in Patent Documents 1 to 6, there are problems that blending a large amount of hindered amine compound causes a bleeding which spoils appearance, and a satisfactory stabilization effect is not achieved, so that a polyolefin resin containing rubber component and having excellent weatherability has been demanded.

Accordingly, an object of the present invention is to provide an olefin elastic resin composition containing a large amount of rubber component and having an excellent weatherability without bleeding or blooming.

### Means for Solving the Problems

As a result of the extensive research for solving the aforesaid problems, the present inventors have discovered that an adding a hindered amine compound having a specific structure and a benzoate compound having a specific structure can improve a weatherability of polyolefin resin having a large amount of rubber component. The present invention has been accomplished by the above finding.

Hence, the olefin elastic resin composition according to the present invention comprises, with respect to 100 parts by mass of a polyolefin resin, 10 to 30 parts by mass of an olefin type rubber component, 0.001 to 10 parts by mass of a hindered amine compound represented by the following general formula (1), 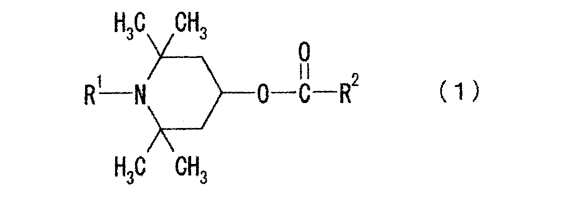 (wherein R¹ represents a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms or an oxyradical; and R² represents an alkyl group having 1 to 30 carbon atoms or an alkenyl group having 2 to 30 carbon atoms), and 0.001 to 10 parts by mass of a benzoate compound represented by the following general formula (2), 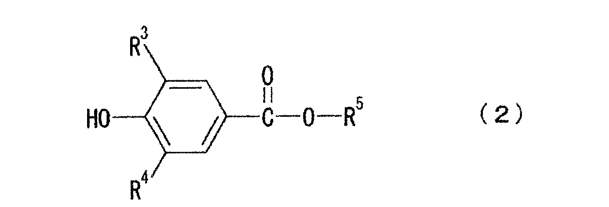 (wherein R³ and R⁴ each independently represent a hydrogen atom, an alkyl group having 1 to 12 carbon atoms or an arylalkyl group having 7 to 30 carbon atoms; and R⁵ represents an alkyl group having 1 to 30 carbon atoms).

In the olefin elastic resin composition of the present invention, it is preferred that R² in the general formula (1) is an alkyl group having 8 to 26 carbon atoms. Also, it is preferred that the composition contains two or more hindered amine compounds wherein R¹ in the general formula (1) is a methyl group as well as R² in the general formula (1) is an alkyl group having 8 to 26 carbon atoms.

Furthermore, in the olefin elastic resin composition of the present invention, it is preferred that R⁵ in the general formula (2) is an alkyl group having 6 to 24 carbon atoms.

### Effects of the Invention

The present invention enables to provide an olefin elastic resin composition containing a large amount of rubber component and having an excellent weatherability without bleeding or blooming.

### Best Mode for Carrying out the Invention

Preferred embodiments of the present invention will be described in detail below.

Examples of the polyolefin resin used in the present invention include α-olefin homopolymers or copolymers, such as polypropylene, low density polyethylene, linear low density polyethylene, high density polyethylene, polybutene-1, poly-3-methylpentene, poly-4-methylpentene, ethylene-propylene copolymers and the like, and copolymers of these α-olefins with compound having plural unsaturated bonds such as conjugated dienes or non-conjugated dienes.

Although the stabilizing effect varies depending on the polyolefin resin, that is, on the stereoregularity, specific gravity, the type of polymerization catalyst, whether the polymerization catalyst was removed or not, and if removed, the degree of removal, the degree of crystallinity, the polymerization conditions such as temperature and pressure, the type of the crystals, size of the lamella crystals measured by X-ray small angle scattering, aspect ratio of the crystals, solubility in aromatic or aliphatic solvent, solution viscosity, melt viscosity, average molecular weight, degree of molecular weight distribution, the number of peaks in the molecular weight distribution, when the resin is a copolymer, whether the copolymer is a block copolymer or random copolymer, and the ratio of each monomer, and the like, the polyolefin resin can be applied to any resin.

Examples of the olefin type rubber component used in the present invention include a polymer comprising one or more olefins having 2 to 10 carbon atoms such as ethylene, propylene, 1-butene, 2-methyl propylene, 3-methyl-1-butene, and 1-hexene. Such polyolefin rubber may include repeating unit composed of monomer other than olefin. Examples of the monomer other than olefin include a conjugated diene having 4 to 8 carbon atoms such as 1,3-butadiene, 2-methyl-1,3-butadiene (isoprene), 1,3-pentadiene and 2,3-dimethyl-1,3-butadiene; and a non-conjugated diene having 5 to 15 carbon atoms such as dicyclopentadiene, 5-ethylidene-2-norbornene, 1,4-hexadiene, 1,5-dicyclooctadiene, 7-methyl-1,6-octadiene, and 5-binyl-2-norbornene.

Examples of the olefin type rubber component used in the present invention also include propylene homopolymer, 1-butene homopolymer, 2-methylpropene homopolymer, ethylene-propylene copolymer, ethylene-1-butene copolymer, ethylene-3-methyl-1-butene copolymer, ethylene-1-hexene copolymer, ethylene-1-octene copolymer, propylene-1-butene copolymer, propylene-1-hexene copolymer, propylene-1-octene copolymer, ethylene-propylene-5-ethylidene-2-norbornene copolymer, ethylene-propylene-1-butene copolymer, ethylene-propylene-1-hexene copolymer, and ethylene-propylene-1-octene copolymer.

These polyolefin type rubber components are used either alone or in combination of two or more, and can be produced by known methods.

In addition, as the polyolefin type rubber component according to the present invention, from the view point of improving a cold temperature impact resistance of resultant molded body, an ethylene-α-olefin copolymer is preferably used. As the α-olefin, from the view point of easiness to obtain, propylene, 1-butene, 1-hexene, or 1-octene is preferable.

Additionally, the content of the polyolefin type rubber component according to the present invention is preferably 10 to 30 parts by mass, more preferably 15 to 25 parts by mass with respect to 100 parts by mass of polyolefin resin. If the content of the polyolefin type rubber component is less than 10 parts by mass, satisfactory elasticity and impact resistance may not be obtained. On the other hand, if the content exceeds 30 parts by mass, there may cause problems such as deterioration of physical property of the resin and spoiling of appearance of the resin composition due to bleeding or blooming. In the present invention, the blend of 10 to 30 parts by mass of olefin type rubber component and 100 parts by mass of polyolefine resin can make it to be a thermoplastic elastomer.

The hindered amine compound used in the present invention is represented by the above general formula (1), wherein R¹ represents a hydrogen atom, a hydroxyl group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms or an oxy radical; and R² represents an alkyl group having 1 to 30 carbon atoms or an alkenyl group having 2 to 30 carbon atoms. Particularly, it is preferred that R² is an alkyl group having 8 to 26 carbon atoms. It is also preferred that R¹ is a methyl group as well as R² is an alkyl group having 8 to 26 carbon atoms.

Furthermore, in the present invention, two or more hindered amine compounds wherein R¹ is a methyl group as well as R² is an alkyl group having 8 to 26 carbon atoms can be preferably included.

Examples of the alkyl group having 1 to 30 carbon atoms of R¹ and R² in the above general formula (1) include methyl, ethyl, propyl, isopropyl, butyl, isobutyl, secondary butyl, tertiary butyl, pentyl, secondary pentyl, tertiary pentyl, hexyl, heptyl, octyl, isooctyl, 2-ethylhexyl, tertiary octyl, nonyl, isononyl, decyl, undecyl, dodecyl, tridecyl, tetradecyl, pentadecyl, hexadecyl, heptadecyl, octadecyl, eicosyl, docosyl, tetradocosyl and the like.

In the above general formula (1), examples of the hydroxyalkyl group having 1 to 30 carbon atoms of R¹ include hydroxy substitution products of the above-described alkyl groups such as hydroxyethyl, 2-hydroxypropyl, 3-hydroxypropyl and the like. Also, examples of the alkoky group having 1 to 30 carbon atoms of R¹ include methoxy, ethoxy, propoxy, isopropoxy, butoxy, octoxy, 2-ethylhexyloxy and the like that correspond to the above-described alkyl group. Examples of hydroxyalkoxy group having 1 to 30 carbon atoms of R¹ include hydroxyethyloxy, 2-hydroxypropyloxy, 3-hydroxypropyloxy, 4-hydroxybutyloxy, 2-hydroxy-2-methylpropyloxy, 6-hydroxyhexyloxy and the like that correspond to the above-described alkoxy group.

Examples of the alkenyl group having 2 to 30 carbon atoms of R² in the above general formula (1) include vinyl, propenyl, butenyl, hexenyl, oleyl and the like. The alkenyl group may be either of linear or branched chain and the double bond position is not particularly limited.

More specific examples of the compounds represented by the above general formula (1) include the Compound Nos. 1 to 9 shown below. However, the present invention is not restricted at all by the compounds below.

### Compound No. 1

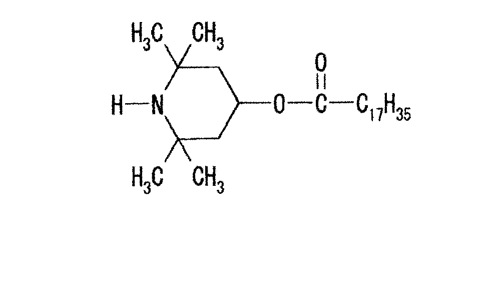

### Compound No. 2

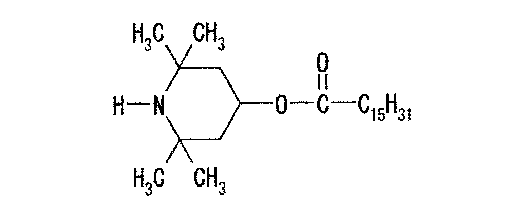

### Compound No. 3

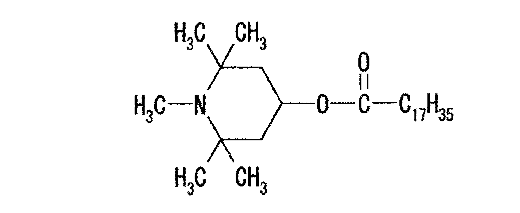

### Compound No. 4

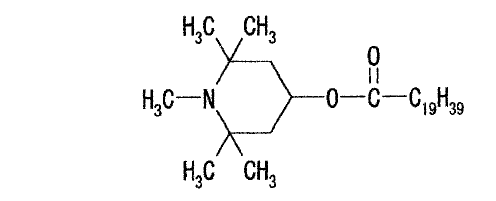

### Compound No. 5

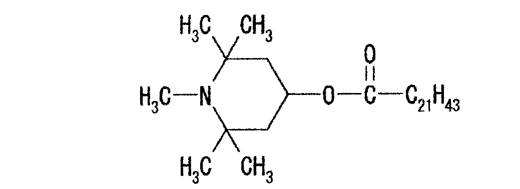

### Compound No. 6

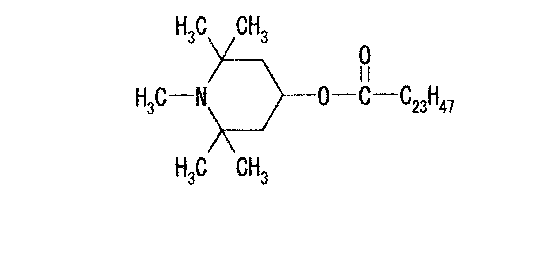

### Compound No. 7

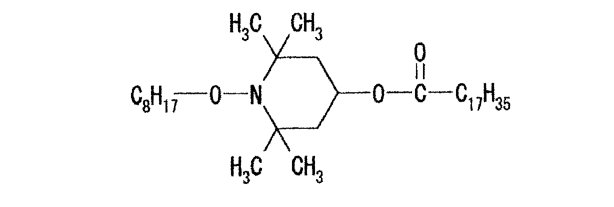

### Compound No. 8

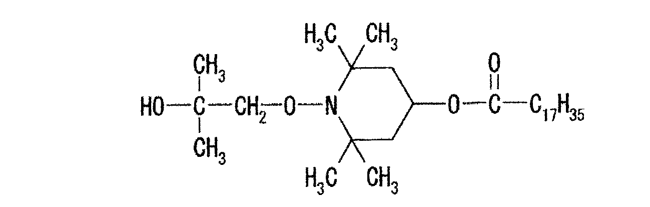

### Compound No. 9

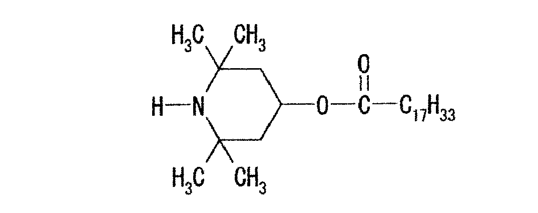

The synthetic process of the hindered amine compounds represented by the above general formula (1) is not particularly restricted, and the compounds can be synthesized by usual organic synthesis processes. As the purification method, distillation, recrystallization, reprecipitation and a method in which a filtering material or absorption material is used, may appropriately be employed. In addition, the compounds usually available from the market at cheaper price are chiefly in the form of a mixture, so that they may be utilized singly or as a mixture irrespective of the process for preparation, composition, melting point, acid value or the like.

The content of the hindered amine compound represented by the above general formula (1) is 0.001 to 10 parts by mass, preferably 0.01 to 5 parts by mass with respect to 100 parts by mass of polyolefin resin. If the content of the hindered amine compound is less than 0.001 parts by mass, a satisfactory stabilizing effect may not be obtained. On the other hand, if the content exceeds 10 parts by mass, there may cause problems such as deterioration of physical property of the resin and spoiling of appearance of the resin composition due to bleeding or blooming.

The benzoate compound used in the present invention is represented by the above general formula (2): wherein R³ and R⁴ each independently represents a hydrogen atom, an alkyl group having 1 to 12 carbon atoms, or an arylalkyl group having 7 to 30 carbon atoms, and R⁵ represents an alkyl group having 1 to 30 carbon atoms, preferably 6 to 24 carbon atoms.

Examples of the alkyl group having 1 to 12 carbon atoms of R³ and R⁴ in the above general formula (2) include methyl, ethyl, propyl, isopropyl, butyl, secondary butyl, tertiary butyl, pentyl, hexyl, octyl, a cycloalkyl group such as cyclopentyl and cyclohexyl, and the like. Examples of the arylalkyl group having 7 to 30 carbon atoms include benzyl, phenylethyl, 1-methyl-1-phenylethyl and the like.

Examples of the alkyl group having 1 to 30 carbon atoms of R⁵ in the above general formula (2) include methyl, ethyl, propyl, isopropyl, butyl, secondary butyl, tertiary butyl, pentyl, hexyl, octyl, nonyl, decyl, undecyl, dodecyl, tridecyl, tetradecyl, pentadecyl, hexadecyl, octadecyl and the like.

More specific examples of the compounds represented by the above general formula (2) include the Compound Nos. 10 to 12 shown below. However, the present invention is not restricted at all by the compounds below.

### Compound No. 10

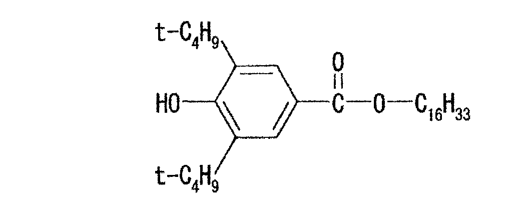

### Compound No. 11

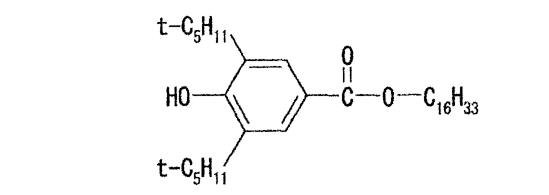

### Compound No. 12

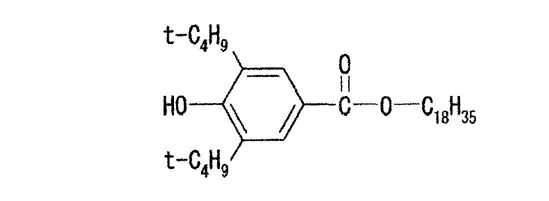

The synthetic process of the benzoate compounds represented by the above general formula (2) is not particularly restricted, and the compounds can be synthesized by usual organic synthesis processes. As the purification method, distillation, recrystallization, reprecipitation and a method in which a filtering material or absorption material is used, may appropriately be employed. In addition, the compounds may be utilized singly or as a mixture.

The content of the benzoate compound represented by the above general formula (2) is 0.001 to 10 parts by mass, preferably 0.01 to 5 parts by mass with respect to 100 parts by mass of the polyolefin resin. If the content of the benzoate compound is less than 0.001 parts by mass, a satisfactory stabilizing effect may not be obtained. On the other hand, if the content exceeds 10 parts by mass, there may cause problems such as deterioration of physical property of the resin and spoiling of appearance of the resin composition due to bleeding or blooming.

In the present invention, the method for blending such a resin additive with the resin is not particularly restricted, and well-known techniques for blending stabilizer with the resin can be employed. Any of a method in which the resin additive is added to a polymerization system in advance when the polyolefin resin is produced by polymerization; a method in which the resin additive is added during the polymerization; and a method in which the resin additive is added after the polymerization can be employed. In cases where the resin additive is added after the polymerization, a method in which the resin additive is mixed with the powder or pellets of the polyolefin resin to stabilize with a Henschel mixer or the like and the obtained mixture is kneaded in an extruder or the like; a method in which the solution of the resin additive is splayed and impregnated into the polyolefin resin; and a method in which the resin additive is used after being formed into a master batch, can be employed. In these cases, the type of the processing machine used, the processing temperature, the cooling condition after processing and the like are not particularly restricted, and conditions under which the physical properties of the obtained resin are suited for the use are preferably selected. The resin additives according to the present invention may also be used after being formed into granules individually or in combination with other additive(s).

In the present invention, in cases where the resin additives are used for stabilization of synthetic resin, if necessary, various additives which are usually used in each resin are used. Examples of the additives include phenolic antioxidants, sulfur-containing antioxidants, phosphorus-containing antioxidants, other UV absorbers, other hindered amine compounds, nucleating agents, flame retardants, flame retardant aids, lubricants, fillers, fibrous fillers, metal soaps, hydrotalcites, antistatic agents, pigments, dyes and the like.

Examples of the above-described phenolic antioxidant include 2,6-di-tertiary butyl-p-cresol, 2,6-diphenyl-4-octadecyloxyphenol, distearyl(3,5-di-tertiary butyl-4-hydroxybenzyl)phosphonate, 1,6-hexamethylenebis [(3,5-di-tertiary butyl-4-hydroxyphenyl) propionic acid amide], 4,4'-thiobis(6-tertiary butyl-m-cresol), 2,2'-methylenebis(4-methyl-6-tertiary butylphenol), 2,2'-methylenebis(4-ethyl-6-tertiary butylphenol), 4,4'-butylidenebis(6-tertiary butyl-m-cresol), 2,2'-ethylidenebis(4,6-di-tertiary butylphenol), 2,2'-ethylidenebis(4-secondary butyl-6-tertiary butylphenol), 1,1,3-tris(2-methyl-4-hydroxy-5-tertiary butylphenyl)butane, 1,3,5-tris(2,6-dimethyl-3-hydroxy-4-tertiary butylbenzyl)isocyanurate, 1,3,5-tris(3,5-di-tertiary butyl-4-hydroxybenzyl)isocyanurate, 1,3,5-tris(3,5-di-tertiary butyl-4-hydroxybenzyl)-2,4,6-trimethyl benzene, 2-tertiary butyl-4-methyl-6-(2-acryloyloxy-3-tertiary butyl-5-methylbenzyl)phenol, stearyl(3,5-di-tertiary butyl-4-hydroxyphenyl)propionate, thiodiethylene glycol bis[(3,5-di-tertiary butyl-4-hydroxyphenyl)propionate], 1,6-hexamethylenebis [(3,5-di-tertiary butyl-4-hydroxyphenyl) propionate], bis[3,3-bis(4-hydroxy-3-tertiary butylphenyl)butyric acid]glycol ester, bis[2-tertiary butyl-4-methyl-6-(2-hydroxy-3-tertiary butyl-5-methylbenzyl) phenyl]terephthalate, 1,3,5-tris[(3,5-di-tertiary butyl-4-hydroxyphenyl)propionyloxyethyl]isocyanurate, 3,9-bis[1,1-dimethyl-2-{(3-tertiary butyl-4-hydroxy-5-methylphenyl)propionyloxy}ethyl]-2,4,8,10-tetraoxaspiro[5.5] undecane, triethylene glycol bis [(3-tertiary butyl-4-hydroxy-5-methylphenyl)propionate], tocopherol and the like. The content of the phenolic antioxidant is preferably 0.001 to 10 parts by mass, more preferably 0.05 to 5 parts by mass with respect to 100 parts by mass of polyolefin resin.

Examples of the above-described sulfur-containing antioxidant include diallyl thiodipropionates such as dilauryl thiodipropionate, dimyristyl thiodipropionate and distearyl thiodipropionate, and polyol β-alkylmercaptopropionate esters such as pentaerythritol tetra(β-dodecylmercaptopropionate). The content of the sulfur-containing antioxidant is preferably 0.001 to 10 parts by mass, more preferably 0.05 to 5 parts by mass with respect to 100 parts by mass of polyolefin resin.

Examples of the above-described phosphorous-containing antioxidant include tris-nonylphenyl phosphite, tris[2-tertiary butyl-4-(3-tertiary butyl-4-hydroxy-5-methyl-phenylthio)-5-methylphenyl]phosphite, tridecyl phosphite, octyldiphenyl phosphite, di(decyl)monophenyl phosphite, di(tridecyl)pentaerythritol diphosphite, di(nonylphenyl) pentaerythritol diphosphite, bis(2,4-di-tertiary-butylphenyl) pentaerythritol diphosphite, bis(2,6-di-tertiary-butyl-4-methylphenyl)pentaerythritol diphosphite, bis(2,4,6-tri-tertiary-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene-bis(2-tertiary butyl-5-methylphenol)diphosphite, hexa(tridecyl)-1,1,3-tris(2-methyl-4-hydroxy-5-tertiary butylphenyl)butane triphosphite, tetrakis(2,4-di-tertiary butylphenyl)biphenylene diphosphonite, 9,10-dihydro-9-oxa-10-phosphaphenanthrene-10-oxide, 2,2'-methylenebis (4,6-tertiary-butylphenyl)-2-ethyl hexylphosphite, 2,2'-methylenebis(4,6-tertiary butylphenyl)octadecylphosphite, 2,2'-ethylidenebis(4,6-di-tertiary butyl phenyl)fluorophosphite, tris(2-[(2,4,8,10-tetrakis-tertiary butyl-dibenzo[d,f][1,3,2]dioxa-phosphepin-6-yl)oxy]ethyl)amine, 2-(1,1-dimethylethyl)-6-methyl-4-[3-[[2,4,8,10-tetrakis(1,1-dimethylethyl)dibenzo[d,f][1,3,2] dioxaphosphepin-6-yl]oxy]propyl]phenol, and a phosphite of 2-ethyl-2-butylpropyleneglycol and 2,4,6-tri-tertiary butylphenol. The content of the phosphorous-containing antioxidant is preferably 0.001 to 10 parts by mass, more preferably 0.05 to 5 parts by mass with respect to 100 parts by mass of polyolefin resin.

Examples of the above-described UV absorber include 2-hydroxybenzophenones such as 2,4-dihydroxybenzophenone, 2-hydroxy-4-methoxybenzophenone, 2-hydroxy-4-octoxybenzophenone and 5,5'- methylenebis(2-hydroxy-4-methoxybenzophenone) ; 2- (2'-hydroxyphenyl) benzotriazoles such as 2-(2'-hydroxy-5'-methylphenyl)benzotriazole, 2-(2'-hydroxy-3',5'-di-tertiary butylphenyl)-5-chlorobenzotriazole, 2-(2'-hydroxy-3'-tertiary butyl-5'-methylphenyl)-5-chlorobenzotriazole, 2-(2'-hydroxy-5'-tertiary octylphenyl)benzotriazole, 2-(2'-hydroxy-3',5'-dicumylphenyl)benzotriazole and 2-(2'-hydroxy-3'-tertiary butyl-5'-carboxyphenyl) benzotriazole; benzoates such as phenyl salicylate, resorcinol monobenzoate, 2,4-di-tertiary butylphenyl-3,5-di-tertiary butyl-4-hydroxybenzoate and 2,4-di-tertiary amylphenyl-3,5-di-tertiary butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-tertiary butylphenyl)-s-triazine, 2-(2-hydroxy-4-methoxyphenyl)-4,6-diphenyl-s-triazine, 2-(2-hydroxy-4-propoxy-5-methylphenyl)-4,6-bis(2,4-di-tertiary butylphenyl) -s-triazine. The content of the UV absorber is preferably 0.001 to 10 parts by mass, more preferably 0.05 to 5 parts by mass with respect to 100 parts by mass of polyolefin resin.

Examples of the above-described other hindered amine compound include 1-oxy-2,2,6,6-tetramethyl-4-piperidinol, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl) butanetetracarboxylate, tetrakis(1,2,2,6,6-pentamethyl-4-piperidyl)butane tetracarboxylate, bis(2,2,6,6-tetramethyl-4-pi-peridyl) di(tridecyl)-1,2,3,4-butanetetracarboxylate, bis(1,2,2,6,6-pentamethyl-4-piperidyl)·di(tridecyl)-1,2,3,4-butanetetracarboxylate, 1,9-bis(2,2-dimethyl-2-(tris(2,2,6,6-tetramethyl-4-piperidyloxycarbonyl)butanecarboxyl)ethyl)2,4, 8,10-tetraoxaspiro[5.5]undecane, 1,9-bis(2,2-dimethyl-2-(tris(1,2,2,6,6-pentamethyl-4-piperidyloxycarbonyl)butanecarboxyl)ethyl)2,4,8,10-tetraoxas piro[5.5]undecane, bis(1,2,2,6,6-pentamethyl-4-piperidyl)-2-butyl-2-(3,5-di-tertiary butyl-4-hydroxybenzyl)malonate, a polycondensate of 1-(2-hydroxyethyl)-2,2,6,6-tetramethyl-4-piperidinol/diethylsuccinate, a polycondensate of 1,6-bis (2,2,6,6-tetramethyl-4-piperidylamino)hexane/dibromoethane, a polycondensate of 1,6-bis(2,2,6,6-tetramethyl-4-piperidylamino)hexane/2,4-dichloro-6-morpholino-s-triazine, a polycondensate of 1,6-bis(2,2,6,6-tetramethyl-4-piperidylamino)hexane/2,4-dichloro-6-tertiary-octylamino-s-triazine, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl]aminoundecane, and 1,6,11-tris[2,4-bis(N-butyl-N-(1,2,2,6,6-pentamethyl-4-piperidyl)amino)-s-triazine-6-yl]aminoundecane.

Examples of the above-described nucleating agent include aromatic carboxylic acid metal salts such as aluminum p-t-butyl benzoate and sodium benzoate; acidic phosphoric acid ester metal salts such as sodium bis(2,4-di-tertiary butylphenyl)phosphate, lithium bis(2,4-di-tertiary butylphenyl) phosphate, and sodium-2,2'-methylenebis(4,6-di-tertiary butylphenyl)phosphate; and polyhydric alcohol derivatives such as dibenzylidenesorbitol and bis(methylbenzylidene)sorbitol.

Examples of the above-described flame retardant include halogen-containing flame retardants; phosphorous-containing flame retardants such as red phosphorus, melamine phosphate, guanidine phosphate, phosphoric acid ester compounds, and phosphazene compounds; nitrogen-containing flame retardants such as melamine cyanurate; and metal hydroxides such as magnesium hydroxide, and aluminum hydroxide. Examples of the above-described flame retardant aid include inorganic compounds such as antimony trioxide and zinc borate; and anti-drip agents such as polytetrafluoroethylene.

The above-described hydrotalcites may be either naturally occurring products or synthetic products, and may be employed irrespective of whether a surface treatment has been performed or not and irrespective of whether it has crystal water or not. Examples thereof include the basic carbonic acid salts represented by the following general formula (3):

MₓMg_{y}Al_{z}CO₃(OH)_{xp+2y+3z-2}·nH₂O (3)

(wherein M represents an alkaline metal or zinc, x represents a number of 0 to 6, y represents a number of 0 to 6, z represents a number of 0.1 to 4, p represents the valency of M, and n represents the number of 0 to 100 which indicates the number of crystal water)

Examples of the above-described lubricant include fatty acid amides such as laurylamide, myristylamide, stearylamide and behenylamide; ethylenebis stearylamide; polyethylene wax; metal soaps such as calcium stearate and magnesium stearate; and phosphoric acid ester metal salts such as magnesium distearylphosphoric ester and magnesium stearylphosphoric ester.

As the above-described filler, inorganic substances such as talc, silica, calcium carbonate, glass fibers, potassium titanate and potassium borate are used appropriately selecting the particle size when the filler is spherical, and appropriately selecting the fiber diameter, fiber length and aspect ratio when the filler is fibrous. If necessary, the fillers are preferably subjected to surface treatment to be used.

### Examples

### Examples 1 to 5 and Comparative Examples 1 to 3

The test pieces of 60 mm × 20 mm × 1 mm were prepared by adding olefin type rubber component described in Table 1, 0.1 part by mass of calcium stearate, 0.1 part by mass of tetrakis(3-(3,5-di-tertiary butyl-4-hydroxyphenyl) propionyloxymethyl)methane, 0.05 parts by mass of tris (2,4-di-tertiary butylphenyl) phosphite, 0.1 part by mass of 2-(2-hydroxy-3-tertiary butyl-5-methylphenyl)-5-chlorobenzotriazole and the resin additives described in Table 1, into 100 parts by mass of a block polypropylene resin (MFR=25, density=0.9 g/cm³, flexural modules: 950MPa), pelletizing the mixture at 250°C with an extruder, and then injection-molding the pellets at 250°C. The content in Table stands for parts by mass with respect to 100 parts by mass of the polyolefin resin.

### (Evaluation of weatherability)

Weatherability was evaluated by measuring the time required for the resultant test pieces to be whitened under the raining test condition at 83°C (sprinkling of ion exchanged water: 18 minutes/120 minutes) by using a Sunshine weather meter (produced by Suga Test Instruments Co., Ltd.). The results obtained are together shown in Table 1 below.

### (Evaluation of bleed-out (bloom-out))

After the resultant test pieces were left for a month in an atmosphere of a temperature of 23°C and a relative humidity of 50%, the bleed-out (bloom-out) was evaluated by visual observation according to the following evaluation criterion. The results obtained are together shown in Table 1 below.
○: No bleed-out (bloom-out) was observed.
△: A little bleed-out (bloom-out) was observed.
×: A lot of bleed-out (bloom-out) was observed.

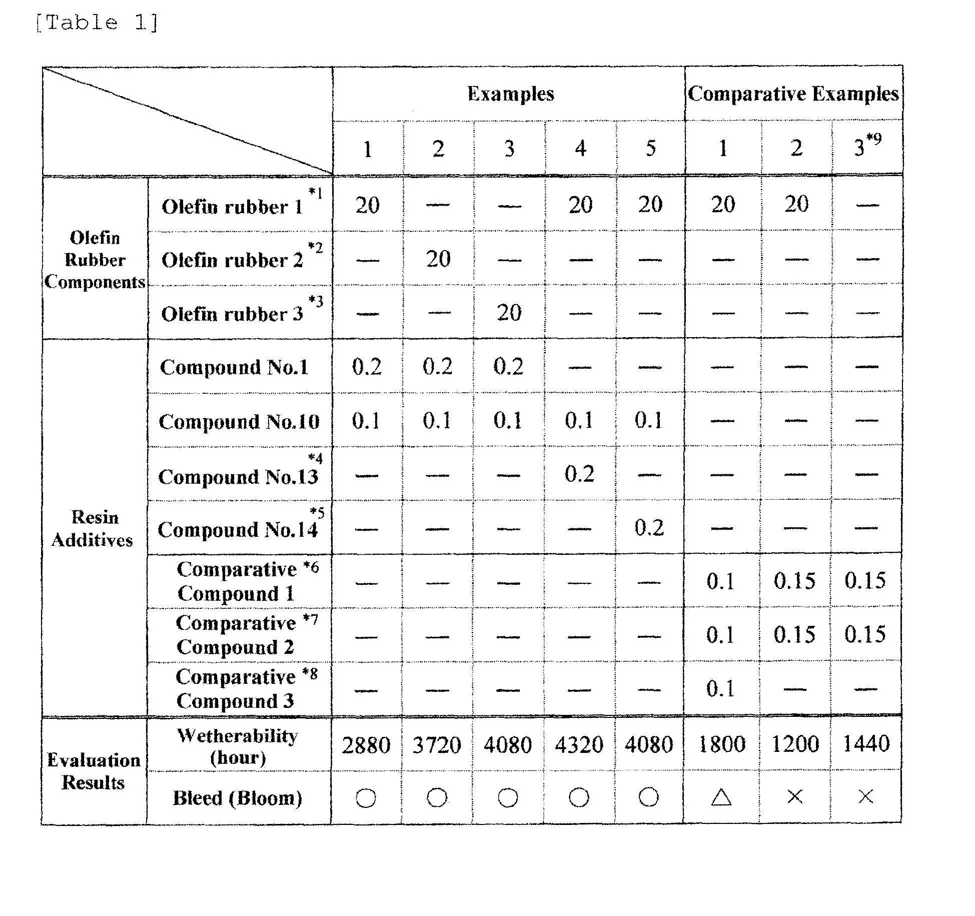

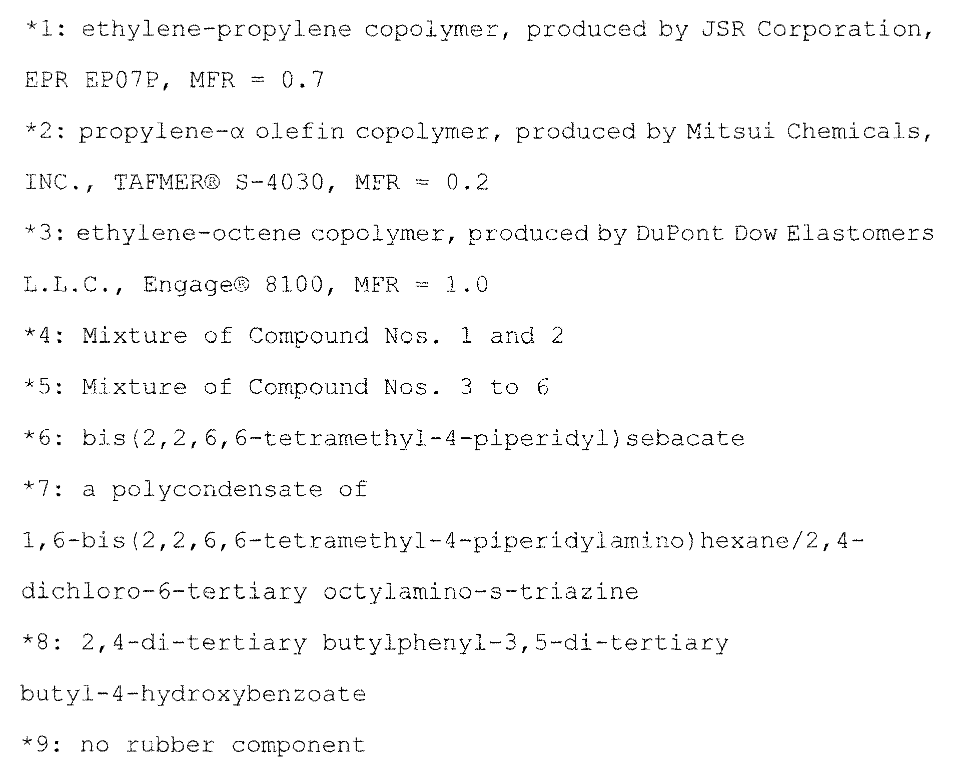

From the test results of Comparative Examples 2 and 3 shown in Table 1, it is noted that the polyolefin resin was deteriorated in weatherability by blending rubber component. It is also noted from the test results of Comparative Examples 1 and 2 that the blending of a hindered amine compound and a benzoate compound slightly increased a weatherability of polyolefin resin incorporated with rubber component. On the other hand, from the test results of Examples and Comparative Examples 1 and 2, it is understood that the resin composition containing rubber component according to the present invention, or in other words, the resin composition jointly incorporated with a specific hindered amine compound and a specific benzoate compound exhibited synergistic effect which is never thought out from the combined use of other hindered amine compounds and benzoate compounds. The resin composition of the present invention also exhibited an excellent weatherability in spite of the case that rubber component was blended with it. Furthermore, although a serious bleed-out (bloom-out) occurred in resin compositions containing rubber component as shown in Comparative Examples 2 and 3, an excellent resin composition without bleed-out (bloom-out) was obtained by using the specific hindered amine and specific benzoate compound of the present invention.

## Claims

1. An olefin elastic resin composition comprising, with respect to 100 parts by mass of a polyolefin resin, 10 to 30 parts by mass of an olefin type rubber component, 0.001 to 10 parts by mass of a hindered amine compound represented by the following general formula (1), 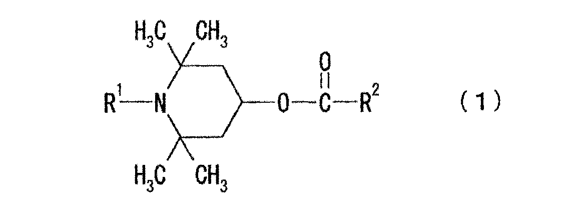 (wherein R¹ represents a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms or an oxyradical; and R² represents an alkyl group having 1 to 30 carbon atoms or an alkenyl group having 2 to 30 carbon atoms),
and 0.001 to 10 parts by mass of a benzoate compound represented by the following general formula (2), 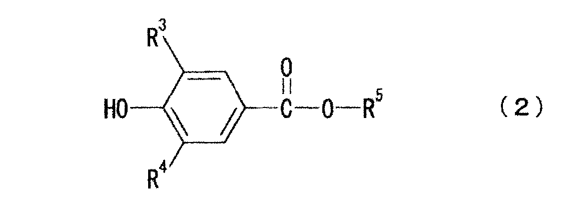 (wherein R³ and R⁴ independently represent a hydrogen atom, an alkyl group having 1 to 12 carbon atoms or an arylalkyl group having 7 to 30 carbon atoms; and R⁵ represents an alkyl group having 1 to 30 carbon atoms).

2. The olefin elastic resin composition according to claim 1, wherein R² in the general formula (1) is an alkyl group having 8 to 26 carbon atoms

3. The olefin elastic resin composition according to claim 1, comprising two or more hindered amine compounds wherein R¹ in the general formula (1) is a methyl group and R² in the general formula (1) is an alkyl group having 8 to 26 carbon atoms.

4. The olefin elastic resin composition according to claim 1, wherein R⁵ in the general formula (2) is an alkyl group having 6 to 24 carbon atoms.

5. The olefin elastic resin composition according to claim 2, wherein R⁵ in the general formula (2) is an alkyl group having 6 to 24 carbon atoms.

6. The olefin elastic resin composition according to claim 3, wherein R⁵ in the general formula (2) is an alkyl group having 6 to 24 carbon atoms.
